# EUROPEAN PATENT APPLICATION

(11) **EP 3 957 482 A1**
(43) Date of publication of application: **23.02.2022**
(21) Application number: 20191800.0
(22) Date of filing: 19.08.2020
(51) Int. Cl.: B41J 2/01, B41J 3/01, B41J 3/407, B41J 11/00, B41J 13/00, B41J 13/08, G06K 1/12, B65H 1/06, G01N 35/00

(54) **GLASS SLIDE PRINTER**

(71) Applicant: Shenzhen Dongfangshitong Technology Development Co.,Ltd., Shenzhen 518000 (CN)
(72) Inventor: LIU, Xiaoxin, Shenzhen, 518000 (CN); HUA, Zhongqiu, Shenzhen, 518000 (CN)
(74) Representative: Stellbrink & Partner Patentanwälte mbB

(57) **Abstract**

The present invention provides a glass slide printer, comprising: a conveying device (3), an inkjet device (4), and a curing device (5); wherein the conveying device (3) has a conveying path, and causes the glass slide to be printed to move along the conveying path; the inkjet device (4) is configured to perform inkjet printing on the marked area of the glass slide (100); the curing device (5) is provided above the conveying path, and the curing device (5) is located downstream of the inkjet device (4); the curing device (5) is capable of curing the printing ink droplets ejected onto the glass slide (100) to form characters or two-dimensional codes by heating or ejecting curing liquid. The curing device (5) of the glass slide printer uses a low thermal curing temperature to avoid thermal decomposition of the paint coating of the glass slide and avoid harmful smoke and dust; and the curing liquid used can be cured at room temperature without harmful gas.

## Description

### TECHNICAL FIELD

The present invention relates to a pathological glass slide printer.

### BACKGROUND

In clinical medicine, a clear pathological diagnosis is often provided by biopsy, cytology, or autopsy to determine the nature of the disease or find the cause of death. A pathological diagnosis needs to prepare pathological tissues into pathological section specimens. The process of preparing pathological section specimens comprises the operating procedures of sampling, fixing, washing, dehydrating, waxing, embedding, sectioning, and staining pathological tissues. Pathological glass slides are used to carry pathological section specimens for pathologists to check under the microscope so as to make a pathological diagnosis. The pathological glass slide is provided with a marked area for writing the pathological section number associated with the pathological tissue specimens.

Because pathological glass slides will be in contact with water, ethanol, xylene and other solutions during the preparation of pathological specimen sections, in order to ensure that the marked pathological section numbers are clear and readable, there is a special requirement for the composition of the marker material of the pathological section number, that is, the requirement that the marker will not dissolve or fall off due to the soaking of the solution.

At present, the pathological section specimen number is manually marked on the pathological glass slide. The manual marker uses a special pencil to handwrite the pathological section number in the marked area, or the pathological section number is printed on a label strip by a label printer in advance, and the label strip is manually pasted on the pathological glass slide when used. However, the method of manually writing or labeling the label strip not only increases the work intensity of a pathology laboratory doctor, but also brings human error, and the working efficiency is very low.

### SUMMARY

In order to solve the above technical problems, the present invention is to provide a glass slide printer to solve the problems in the prior art that it is easy for the character ink to fall off or be damaged.

In view of the above technical problems, the present invention provides a glass slide printer, which performs character and/or two-dimensional code printing on a marked area of a glass slide by inkjet, wherein the glass slide printer comprises: a conveying device, an inkjet device, and a curing device; wherein the conveying device has a conveying path, and causes the glass slide to be printed to move along the conveying path; the inkjet device is provided above the conveying path, and is configured to perform inkjet printing on the marked area of the glass slide on the conveying path; and the curing device is provided above the conveying path, and is located downstream of the inkjet device; wherein the curing device is capable of curing the printing ink droplets ejected onto the glass slide to form characters or two-dimensional codes by heating or ejecting curing liquid.

In a preferred solution, the curing device comprises: an electric heating element or a light radiating device to heat and cure the printing ink droplets.

In a preferred solution, the electric heating element is an infrared heating tube or a heating ceramic plate, and the light radiating device is a laser or an infrared emitter.

In a preferred solution, the curing device comprises: a container for holding curing liquid and an ejecting nozzle; and the curing liquid is capable of being ejected out through the ejecting nozzle to cure the printing ink droplets.

In a preferred solution, the glass slide printer further comprises: a microcontroller configured to control the operation of the conveying device, the inkjet device, and the curing device.

In a preferred solution, the glass slide printer further comprises: an image acquiring device configured to acquire a character to be printed and/or a character of a two-dimensional code; the microcontroller comprises: a control module and a character recognizing module; the image acquiring device is capable of capturing an image of a character and/or a two-dimensional code to be printed, and transmitting the image information to the character recognizing module; the character recognizing module is capable of analyzing and reading the characters in the image, and sending the read character data to the control module; and the control module controls the inkjet device to eject ink on the glass slide to form the character and/or the two-dimensional code.

In a preferred solution, the glass slide printer further comprises: a feeding device provided above the conveying device; the feeding device is configured to load the glass slide to be printed, the feeding device has a discharge port, the discharge port faces the conveying path, and the glass slide in the feeding device is capable of being removed from the discharge port onto the conveying path sequentially.

In a preferred solution, the feeding device comprises: a glass slide cassette, a glass slide pushing mechanism, and a weight reducing mechanism, wherein the glass slide cassette is located on one side of the conveying path; wherein the glass slide cassette has a receiving space in which a plurality of glass slides are stacked, and the discharge port is provided on one side of the lower part of the glass slide cassette; wherein openings are provided at two opposite sides of the glass slide cassette at the same height; the glass slide pushing mechanism is provided corresponding to the discharge port, and is configured to push a glass slide at the lower end of the glass slide cassette to the conveying path via the discharge port; the weight reducing mechanism is provided corresponding to the openings, and is capable of lifting the glass slide above the height position where the openings are located.

In a preferred solution, the weight reducing mechanism comprises: two gears meshed with each other, two deflection plates correspondingly connected with the two gears, respectively, and a weight reducing motor for driving the gears to rotate; the two deflection plates are correspondingly provided at two of the openings, when the two gears mesh with each other and rotate, the two deflection plates are capable of being driven to swing upward or downward simultaneously; when the two deflection plates swing upward, the outer ends of the deflection plates are capable of simultaneously abutting against the same glass slide and lifting the glass slide upward; and when the two deflection plates swing downward, the lifted glass slide is lowered and separated from the glass slide.

In a preferred solution, the conveying device further comprises: a guide plate; the guide plate is located directly above the conveying path and correspondingly below the discharge port, the guide plate is capable of swinging in a vertical plane, and its swing axis is horizontal and perpendicular to the conveying path; when the glass slide removed from the discharge port falls on the guide plate, the guide plate is caused to swing to an inclined state in the conveying direction of the conveying path, so that the glass slide is conveyed onto the conveying path.

In a preferred solution, the glass slide printer further comprises a base, and the conveying device, the inkjet device, the curing device, and the image acquiring device are all integrated and installed on the base.

In a preferred solution, the conveying device, the inkjet device, and the curing device are all integrated and installed on the base, and the image acquiring device is provided to be separated from the base.

Compared with the prior art, the present invention has the following beneficial effects: the curing device of the glass slide printer according to the present invention uses a low thermal curing temperature to avoid thermal decomposition of the paint coating of the glass slide and avoid harmful smoke and dust; and the curing liquid used by the curing device can be cured at room temperature without harmful gas.

### BRIEF DESCRIPTION OF THE DRAWINGS

FIG. 1 is a schematic diagram of a three-dimensional structure of a glass slide printer according to the embodiment.
FIG. 2 is a schematic diagram of a side structure of a glass slide printer in the X direction according to the embodiment.
FIG. 3 is a schematic diagram of a structure of a glass slide printer in the Y direction according to the embodiment.
FIG. 4 is a schematic diagram of a structure of a part of a glass slide printer in the Y direction before pushing according to the embodiment.
FIG. 5 is a schematic diagram of a structure of a part of a glass slide printer in the Y direction after pushing according to the embodiment.
FIG. 6 is a schematic diagram of a three-dimensional structure of a glass slide cassette according to the embodiment.
FIG. 7 is a schematic diagram of a side structure of a glass slide cassette according to the embodiment.
FIG. 8 is a schematic diagram of a top structure of a glass slide cassette according to the embodiment.
FIG. 9 is a schematic diagram of a structure of the cooperation of two gears (before lifting) of a weight reducing mechanism according to the embodiment.
FIG. 10 is a schematic diagram of a structure of the cooperation of two gears (after lifting) of a weight reducing mechanism according to the embodiment.
FIG. 11 is a schematic diagram of a structure of a weight reducing mechanism before lifting the glass slide according to the embodiment.
FIG. 12 is a schematic diagram of a structure of a weight reducing mechanism after lifting the glass slide according to the embodiment.
FIG. 13 is a working principle diagram when a glass slide is discharged from a discharge port according to the embodiment.
FIG. 14 is a partially enlarged view of part A in FIG. 13.
FIG. 15 is a schematic diagram of a structure of a glass slide being conveyed after being discharged from a discharge port according to the embodiment.
FIG. 16 is a schematic diagram of a structure of a glass slide being conveyed to the working area of an inkjet device and a curing device after being discharged from a discharge port according to the embodiment.
FIG. 17 is a schematic diagram of a structure of a glass slide to be conveyed from a conveying belt according to the embodiment.

The reference numbers are described as follows: 100, a glass slide; 200, an embedding box; 2, a base; 21, an upper support plate; 22, a lower support plate; 23, a pillar; 24, a leg; 3, a conveying device; 31, a conveying belt; 32. a conveying belt driving motor; 33. a guide plate; 301. a bracket; 302. a pulley; 303. a support rod; 34. a sensor; 35. a sensor; 4. an inkjet device; 41. an inkjet ink cartridge; 42. an ink cartridge driving motor; 5, a curing device; 6, a feeding device; 601, a discharge port; 602, a connecting shaft; 61, a glass slide cassette; 611, a side plate; 612, a side plate; 613, a bottom plate; 614, an extension; 62, a glass slide pushing mechanism; 621, a glass slide pushing wheel; 622, a connecting rod; 623, a pushing block; 624, a glass slide pushing motor; 63, a weight reducing mechanism; 631, a gear; 632, a deflection plate; 633, a weight reducing motor 64, a cassette base; 7, a microcontroller; 8, a regulated power supply; 9, an image acquiring device; 901, a bracket.

### DESCRIPTION OF THE EMBODIMENTS

Exemplary embodiments embodying the features and advantages of the present invention will be described in detail in the following description. It should be understood that the present invention can have various changes in different embodiments without departing from the scope of the present invention, and the descriptions and illustrations therein are essentially for the purpose of illustration, rather than limiting the present invention.

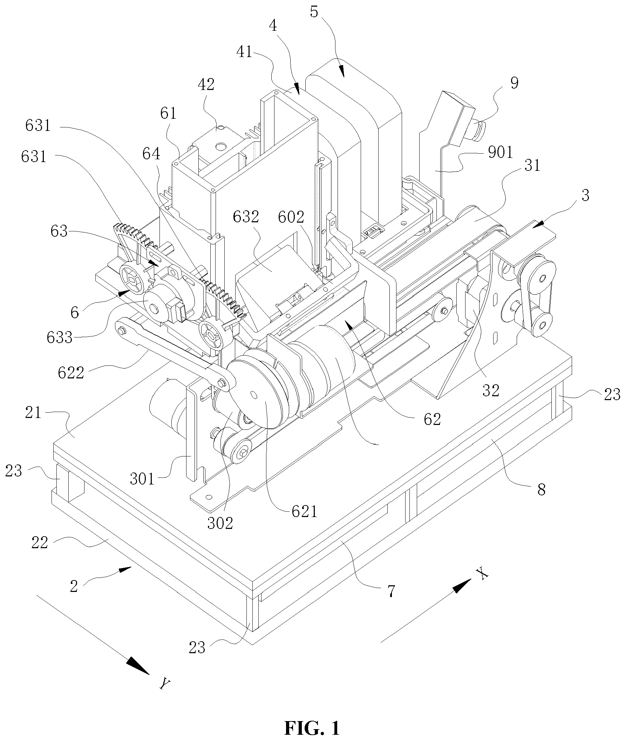

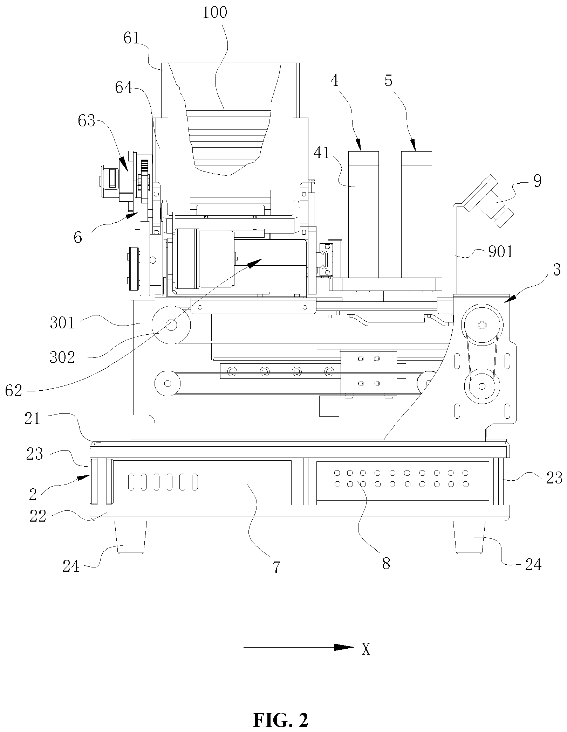

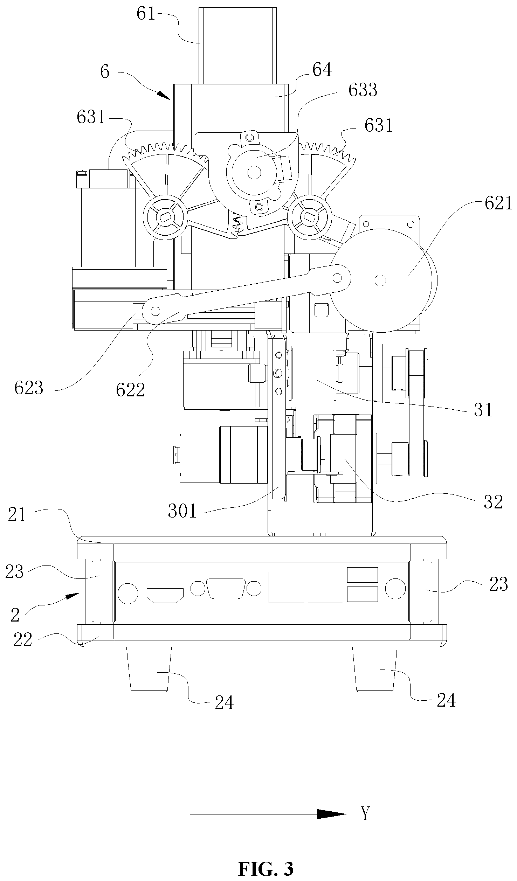

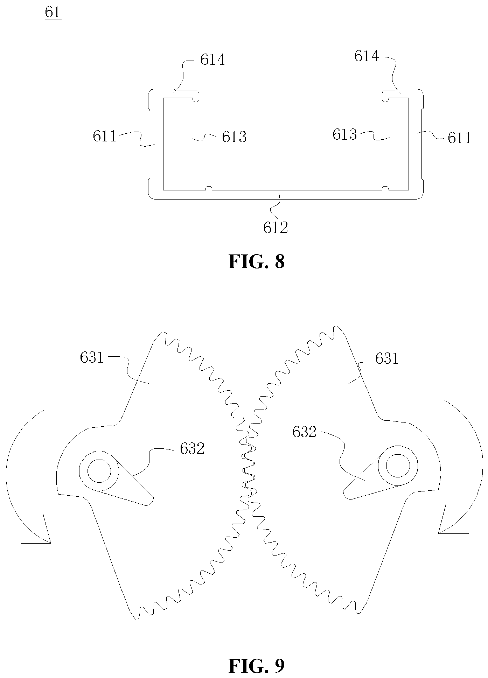

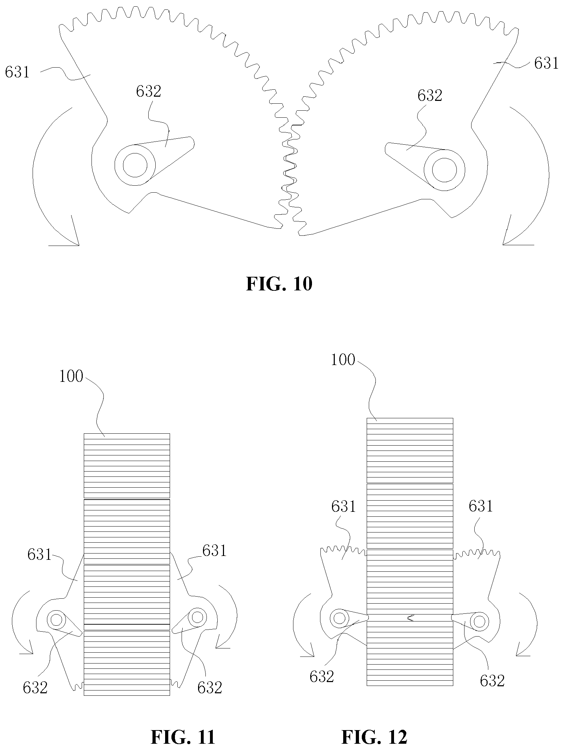

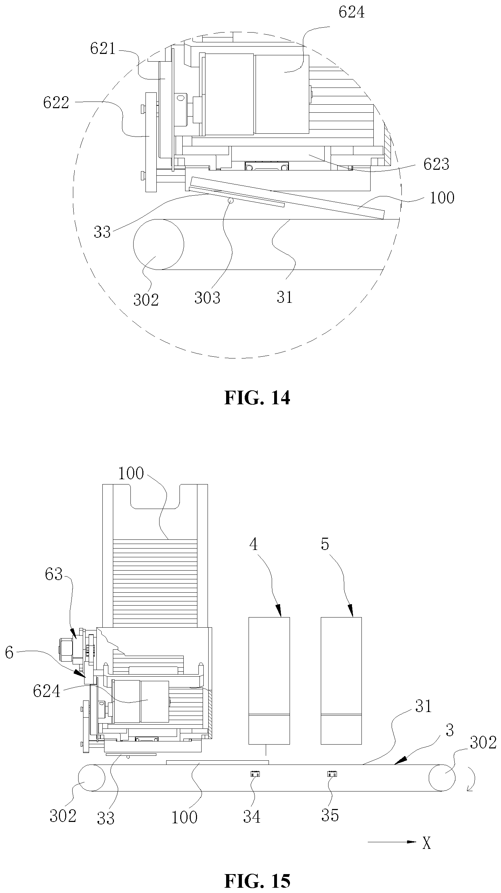

Referring to FIG. 1 to FIG. 17, the glass slide printer provided in the embodiment performs character printing on the marked area of the glass slide 100 by inkjet. The character may be numbers, characters, and/or two-dimensional codes alone or in combination with each other. In particular, the printed characters can have a one-to-one correspondence with the characters on the embedding box 200, wherein the glass slide 100 is a rectangular glass sheet, and a paint marked area is provided at one end of a length thereof to constitute a marked area for printing characters and/or two-dimensional codes in the embodiment.

The glass slide printer of the embodiment comprises a base 2, and a conveying device 3, an inkjet device 4, a curing device 5, a feeding device 6, a microcontroller 7, a regulated power supply 8 and an image acquiring device 9 which are integrated on the base 2.

The conveying device 3 has a conveying path for conveying the glass slide 100 to be printed, and causes the glass slide 100 to be printed to complete the inkjet printing of characters on the conveying path and the curing of the printing ink droplets constituting the characters. The feeding device 6 is configured to load the glass slide 100 to be printed, and is provided above the conveying device 3. The feeding device 6 has a discharge port 601 facing the conveying path. The glass slide 100 in the feeding device 6 is capable of being removed from the discharge port 601 onto the conveying path of the conveying device 3 sequentially. The inkjet device 4 is provided above the conveying path, and is configured to perform inkjet printing of characters on the marked area of the glass slide 100 on the conveying path. The curing device 5 is also provided above the conveying path, and is located downstream of the inkjet device 4. The curing device 5 is capable of curing the printing ink droplets ejected onto the glass slide 100 to form characters by heating or ejecting curing liquid.

Specifically, the base 2 is a bearing member of the glass slide printer, and has a substantially rectangular parallelepiped structure. The base 2 has a lengthwise X direction and a widthwise Y direction in the horizontal direction. The base 2 comprises: an upper support plate 21 and a lower support plate 22 spaced apart in the height direction, and a pillar 23 connected between the upper support plate 21 and the lower support plate 22, wherein a top surface of the upper support plate 21 constitutes the support surface of the base 2, and a microcontroller 7 and a regulated power supply 8 are placed in a space between the upper support plate 21 and the lower support plate 22. The microcontroller 7 comprises a control module and a character recognizing module.

Further, the base 2 further has a leg 24 which is connected to the bottom surface of the lower support plate 22.

In actual use, the shape of the base 2 is not limited to the rectangular parallelepiped structure of the embodiment, and is not limited herein.

The conveying device 3 comprises a conveying belt 31, a conveying belt driving motor 32, a guide plate 33, and a bracket 301.

The bracket 301 is fixedly connected to the support surface of the base 2 in the X direction. Two pulleys 302 are connected to the upper side of the bracket 301 in the X direction. The conveying belt 31 is wound around the two pulleys 302 so that the conveying belt 31 is extended in the X direction, wherein the conveying belt 31 moving on the upper part of the two pulleys 302 constitutes a conveying path. The output shaft of the conveying belt driving motor 32 is connected to one of the pulleys 302 to drive the pulley 302 to rotate and drive the conveying belt 31 to move in the X direction.

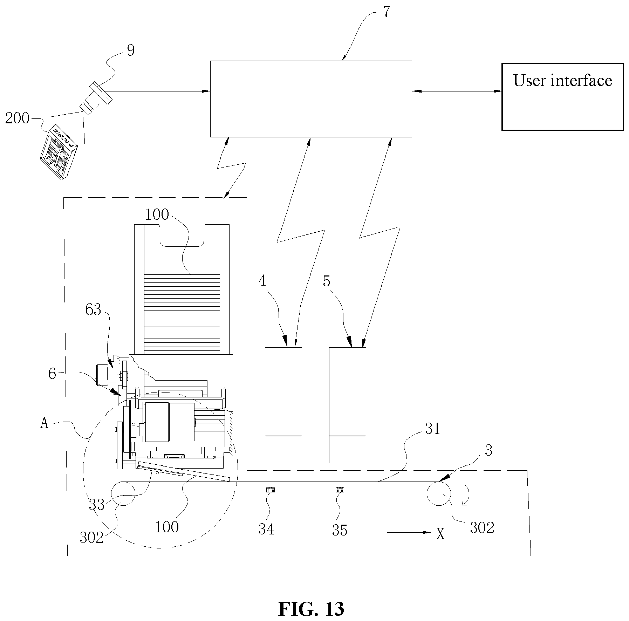

As shown in FIG. 13, the conveying direction of the conveying path is provided from left to right, that is, the direction indicated by the X direction arrow. The guide plate 33 is an elongated plate, and the length direction thereof is provided in the X direction; the guide plate 33 is located directly above the conveying path, and is located below the discharge port 601. The guide plate 33 in the embodiment is suspended directly above the conveying path by a support rod 303. The support rod 303 constitutes a swing axis of the guide plate 33 and the swing axis is horizontal and perpendicular to the conveying path; the support rod 303 is connected to the middle position at the bottom of the guide plate 33 so that the guide plate 33 has a "seesaw" structure, so that the guide plate 33 can swing in a vertical plane. In the natural state, the guide plate 33 is provided horizontally. When the glass slide 100 removed from the discharge port 601 falls on the guide plate 33, the guide plate 33 can swing to an inclined state in the conveying direction of the conveying path, so that the glass slide 100 is sent onto the conveying path.

Further, the discharge port 601 has a horizontal centerline that is perpendicular to the conveying path, and the swing axis is deviated from the horizontal centerline. Furthermore, the swing axis is deviated from the conveying direction away from the conveying path, so that after the glass slide 100 removed from the discharge port 601 falls on the guide plate 33, the glass slide 100 can only be inclined in the conveying direction to ensure that the glass slide 100 can be taken away by the conveying belt 31.

In the embodiment, taking the direction in FIG. 13 as a reference, the length of the guide plate 33 is approximately half the length of the glass slide 100, and the installing position of the guide plate 33 is provided to the left with respect to the position where the glass slide 100 is discharged. After the glass slide 100 is removed from the discharge port 601, the glass slide 100 will fall on the guide plate 33 first. Because a part of the glass slide 100 is carried by the guide plate 33, and the guide plate 33 is inclined to the right under the action of gravity, the right end of the glass slide 100 falls on the conveying belt 31, so that the glass slide 100 is taken away and moved along the conveying path under the action of the conveying belt 31.

In actual use, the length and installing position of the guide plate 33 can be adjusted according to specific conditions to ensure that after the glass slide 100 falls on the guide plate 33, the guide plate 33 can be inclined to the right and move the glass slide 100 to the conveying belt 31.

Further, the conveying device 3 further comprises: a sensor 34 and a sensor 35 for detecting the position of the glass slide 100 moving with the conveying belt 31, as shown in FIGS. 13, 15 to 17. The sensor 34 and the sensor 35 are provided corresponding to the working areas of the inkjet device 4 and the curing device 5, respectively. When the glass slide 100 is moved to the working area of the inkjet device 4 by the conveying belt 31, the sensor 34 sends a position signal to the microcontroller 7, and the microcontroller 7 issues a command to the inkjet device 4 to perform inkjet printing on the marked area of the moving glass slide 100. Then, the glass slide 100 continuing to move reaches the working area of the curing device 5. After the microcontroller 7 obtains the position signal from the sensor 35, the microcontroller 7 sends a command to drive the curing device 5. The curing device 5 cures the printing ink droplets of the marked area of the moving glass slide 100.

Two supporting structures are provided above the conveying path, one for installing the inkjet device 4 and the other for installing the curing device 5. The inkjet device 4 and the curing device 5 are designed to be easily and detachably installed in the installing groove for later replacement. The bottom of each installing groove has an opening so that when the inkjet device 4 and the curing device 5 correspond to the inside of the installing groove, respectively, the inkjet port of the inkjet device 4 and the curing opening of the curing device 5 can work toward the conveying belt 31.

Specifically, the inkjet device 4 comprises an inkjet ink cartridge 41, an ink cartridge driving motor 42, and an ink cartridge cleaning device. The inkjet ink cartridge 41 is configured to contain ink, which is an aqueous or ethanol + water mixed ink containing an active agent and a humectant. The ink is suitable for a paint mark coating of a glass slide and is not easy to block the nozzle of the inkjet ink cartridge. The ink cartridge driving motor 42 is configured to drive the inkjet ink cartridge 41 to perform inkjet operation. The ink cartridge cleaning device can clean the nozzle of the inkjet ink cartridge 41 to prevent the nozzle from being blocked and affecting the inkjet effect.

The curing device 5 cures the printing ink droplets with a thermal curing method. The curing device 5 comprises: an electric heating element or a light radiating device. The electric heating element may be an infrared heating tube or a heating ceramic plate, and the light radiating device may be a laser or an infrared emitter. The heat curing temperature of the electric heating element or the light radiating device used is relatively low, which is between 150° C and 200° C, which does not cause thermal decomposition of the paint coating of the glass slide 100 and avoid harmful smoke and dust.

In other embodiments, the curing device 5 may also cure the printing ink droplets with a chemical curing method. The curing device 5 comprises a container for holding curing liquid and a micro-ejecting nozzle, and the curing liquid is capable of being ejected out through the micro-ejecting nozzle to cure the printing ink droplets. The curing liquid in the embodiment is electrolytic ion water, a weak acid solution or a weak alkaline solution, which does not generate harmful gas at room temperature, and greatly improves safety.

The feeding device 6 comprises a glass slide cassette 61, a glass slide pushing mechanism 62, a weight reducing mechanism 63, and a cassette base 64.

The cassette base 64 is fixedly connected to the bracket 301 and is located on the other side of the bracket 301 with respect to the conveying belt 31. The cassette base 64 has a groove adapted to the shape of the glass slide cassette 61 so that the glass slide cassette 61 can be detachably installed therein. It should be noted that the cassette base 64 is located on one side of the conveying belt 31 in the height direction, and the bottom of the cassette base 64 is provided slightly higher than the conveying belt 31. The outer end of the support rod 303 for fixing the guide plate 33 is fixedly connected to the bottom of the cassette base 64.

The glass slide cassette 61 is located on one side of the conveying path; the glass slide cassette 61 has a receiving space in which a plurality of glass slides 100 are stacked, and the discharge port 601 is provided on one side of the lower part of the glass slide cassette 61; wherein openings are provided at two opposite sides of the glass slide cassette 61 at the same height.

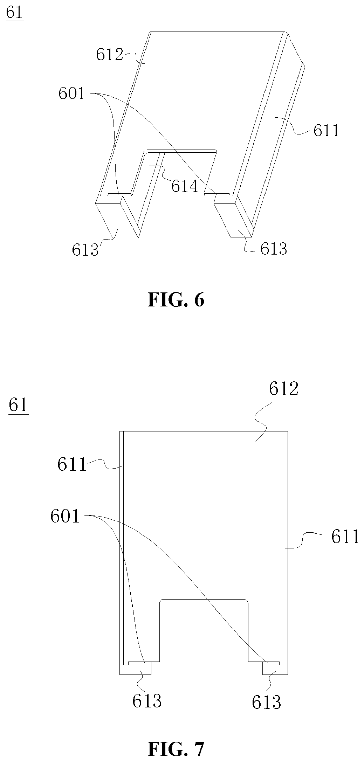

As shown in FIG. 6 to FIG. 8, specifically, the glass slide cassette 61 has a substantially rectangular parallelepiped shape and is opened at the top. Specifically, the glass slide cassette 61 comprises two opposite side plates 611, a side plate 612 connected between the two side plates 611 and two bottom plates 613 located at the bottom and spaced in the X direction. The side plate 611 is vertically provided. Both sides of the side plate 612 are connected to the same side of the side plate 611. The other side of the side plate 611 extends opposite to each other and has an extension 614. The position where each extension 614 extends is provided to be aligned with the corresponding bottom plate 613; wherein the opening between the two extensions 614 constitutes the opening on the side of the lower part of the glass slide cassette 61.

In the embodiment, an inner space surrounded by the side plate 611, the side plate 612, the bottom plate 613, and the extension 614 constitutes a receiving space in which a plurality of glass slides 100 are stacked. There is a gap between the lower edge of the side plate 612 and the two bottom plates 613 to form the discharge port 601, and the middle part of the lower part of the side plate 612 has an upward gap to form the opening on the side of the lower part of the glass slide cassette 61. The opening is communicated with the discharge port 601.

The glass slide pushing mechanism 62 is provided corresponding to the discharge port 601, and is configured to push a glass slide 100 at the lower end of the glass slide cassette 61 to the conveying path via the discharge port 601. Specifically, the pushing mechanism 62 comprises a glass slide pushing wheel 621, a connecting rod 622, a pushing block 623, and a glass slide pushing motor 624. The glass slide pushing wheel 621 and the glass slide pushing motor 624 are provided on the same side of the conveying device 3 with respect to the bracket 301. The pushing block 623 is provided on the same side of the feeding device 6 with respect to the bracket 301. The pushing block 623 is connected with the glass slide pushing wheel 621 through the connecting rod 622.

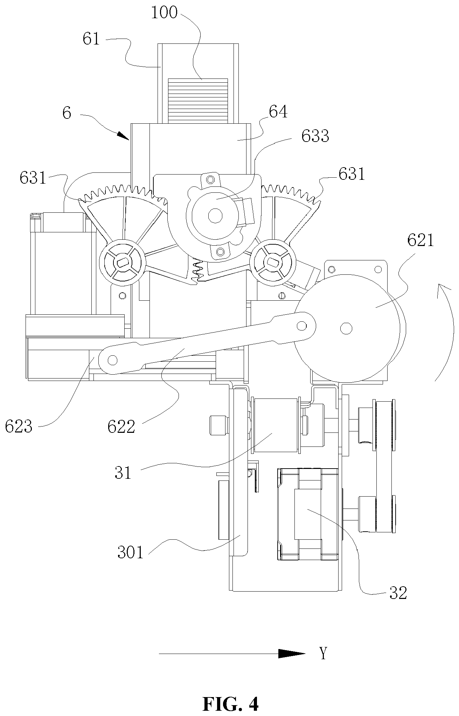

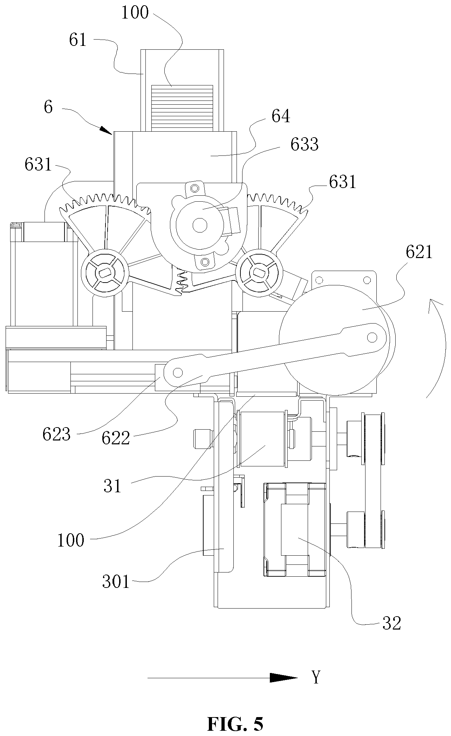

The working principle of the glass slide pushing mechanism 62 is as follows: when the glass slide pushing motor 624 drives the glass slide pushing wheel 621 to rotate counterclockwise, the glass slide pushing wheel 621 drives the connecting rod 622 to move the pushing block 623 in the Y-axis direction, as shown in FIG. 4; when the glass slide pushing wheel 621 continues to rotate so that the connecting rod 622 reaches the right dead center, the pushing block 623 can push a glass slide 100 from the glass slide cassette 61 to the conveying belt 31, as shown in FIG. 5; thereafter, the pushing block 623 returns to the starting point under the action of the connecting rod 622, and the glass slide 100 at the bottom in the glass slide cassette 61 moves downward under gravity to complete the preparation for pushing the next glass slide 100.

The weight reducing mechanism 63 is provided corresponding to the opening, and is capable of lifting the glass slide 100 above the height position where the openings are located. Before the glass slide pushing mechanism 62 is operated, the weight reducing mechanism 63 lifts a part of the glass slide 100 in the glass slide magazine 61 upward; and after the glass slide pushing mechanism 62 is operated, the weight reducing mechanism 63 lowers the lifted part of the glass slide 100.

Specifically, the weight reducing mechanism 63 comprises two gears 631 meshed with each other, two deflection plates 632, and a weight reducing motor 633.

The two gears 631 are symmetrically located at one end of the glass slide cassette 61 in the X direction, and the two deflection plates 632 are fixedly connected to the two gears 631 through the connecting shaft 602, respectively. The two deflection plates 632 are correspondingly provided at two of the openings, and the two deflection plates 632 are symmetrically located on both sides of the glass slide cassette 61 in the X direction. Each of the deflection plates 632 extends radially along its corresponding gear 631 and each of the deflection plates 632 corresponds to the opening of the glass slide cassette 61. The weight reducing motor 633 can drive the two gears 631 to be meshed with each other and rotate, and drive the two deflection plates 632 to swing upward or downward. When the two deflection plates 632 swing upward, the outer ends of the deflection plates 632 are capable of simultaneously abutting against the same glass slide 100 and simultaneously lifting the glass slide 100 above the position upward. When the two deflection plates 632 swing downward, the lifted glass slide 100 is lowered, and the two deflection plates 632 are separated from the glass slide 100. The weight reducing mechanism 63 is provided to avoid scratches on the surface of the glass slide caused by excessive friction during the process of pushing the whole glass slide 100 out of the discharge port 601 due to the fact that the bottommost glass slide 100 bears the weight of all the glass slides 100. These surface scratches will greatly affect the normal observation and diagnosis of pathological sections by the pathologists under the microscope.

Preferably, the two deflection plates 632 extend in the X direction against the outer end of the glass slide 100, and the outer end is the length slightly shorter than the length of the glass slide 100 and is adapted to the opening so that it is more stable when the two deflection plates 632 lift the glass slide 100 upward. At the same time, rubber pads or other soft pads are provided on the outer ends of the two deflection plates 632 so that the contact between the two deflection plates 632 and the glass slide 100 is flexible and friction is increased.

The characters to be printed on the pathological glass slide in the embodiment adopt an optical character recognition technology (OCR). Specifically, the image acquiring device 9 and the microcontroller 7 are used in cooperation.

The image acquiring device 9 is configured to acquire characters on the pathological embedding box and then provide the characters to the printer of the embodiment to be printed on the glass slide 100. In the embodiment, the image acquiring device 9 is a camera. The camera is fixedly connected to the base 2 through a bracket 901. The camera acquires a picture of the characters on the pathological embedding box by taking a picture. The character recognizing module in the microcontroller 7 can analyze and read the characters in the picture and send the read character information to the control module in the microcontroller 7. The control module then controls the inkjet device 4 to print corresponding characters on the marked area of the glass slide 100.

In other embodiments, the image acquiring device 9 can also be provided to be separated from the base 2 so that the image acquiring device 9 can be connected to the printer through a USB port or a wireless network as an independent component.

It should be noted that the image acquiring device 9 can acquire the characters on the pathological embedding box individually or in batches. In actual use, the characters to be printed (that is, the pathological numbers on the pathological embedding box) are located on the embedding box 200. The characters to be printed are acquired after being arranged in a preset arrangement order in batches, and the character printing of the glass slide is performed in a predetermined order.

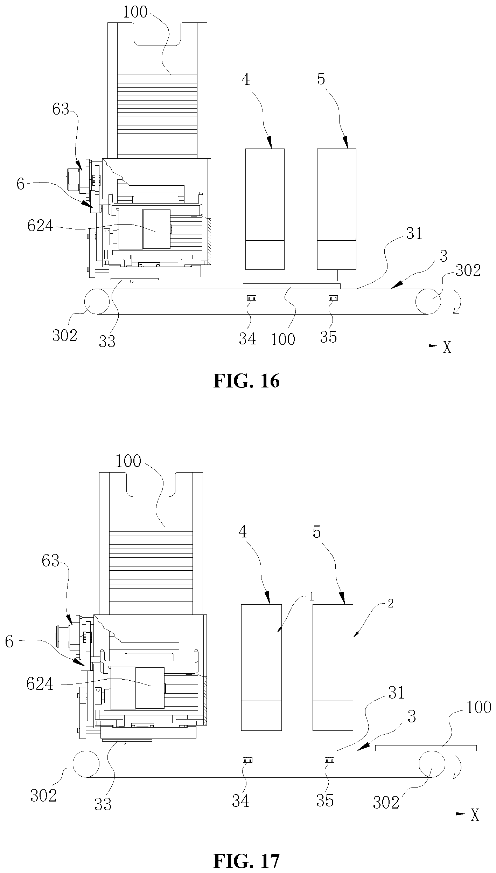

Refer to FIG. 13 to FIG. 17 again. In the embodiment, the whole printing process is completed through acquisition of images and analysis of characters, character inkjet printing, and ink droplet curing of the glass slide printer in the embodiment. Specifically, when the user moves the pathological specimen embedding box 200 into the capturing range of the image acquiring device 9, the image acquiring device 9 automatically captures an image containing characters (pathological numbers) on the marked surface of the pathological specimen embedding box 200, analyzes the pathological number after the captured image information is processed by the microcontroller 7, converts the pathological number to the corresponding pathological section number data, and sends it to the inkjet device 4. At the same time, the microcontroller 7 issues a command to drive the feeding device 6 to push a glass slide 100 to the conveying belt 31 on the conveying device 3. The conveying belt 31 moves the glass slide 100 in the X direction arrow. When the glass slide 100 is moved below the inkjet ink cartridge 41 in the inkjet device 4 (see FIG. 16), the corresponding characters of the inkjet ink cartridge 41 are ejected onto the marked area (that is, the paint marked surface) of the glass slide 100. The glass slide 100 is then conveyed below the curing device 5 by the conveying belt 31 (see FIG. 17).

When the printer of the embodiment cures the printing ink droplets with a thermal curing method, the thermal radiation or light radiation emitted by the curing device 5 irradiates the paint marked surface of the glass slide 100 to rapidly increase the temperature of the ink droplets, thereby curing the ink droplets. When the chemical curing method is adopted, the micro-ejecting nozzle of the curing device 5 ejects the curing liquid onto the paint marked surface of the glass slide 100, and the ink droplets in contact with the curing liquid are quickly curried with the curing liquid. The cured glass slide 100 is finally transferred out by the conveying belt 31, and the machine completes printing of one glass slide 100 (see FIG. 18).

Further, the glass slide printer of the embodiment further has a housing to protect the conveying device 3, the inkjet device 4, the curing device 5, the feeding device 6, the microcontroller 7, and the regulated power supply 8 in the upper space of the base 2, the glass slide printer is integrated, and the image acquiring device 9 is protruded from the housing part through the bracket 901. In order to adapt to the use of the operator, the direction indicated by the X direction arrow, that is, the side where the glass slide 100 exits, is the front side of the printer, and the image acquiring device 9 is provided toward the front side of the printer to improve the convenience of operation.

The curing device of the glass slide printer according to the present invention uses a low thermal curing temperature to avoid thermal decomposition of the paint coating of the glass slide and avoid harmful smoke and dust. The chemical curing liquid used in the curing device is electrolytic ion water or a solution of weak acid and weak alkali and is cured at room temperature without harmful gas.

Further, the present invention adopts an image acquiring device and a computer character recognition technology (OCR), and uses a microcontroller included in the machine to enable a pathology glass slide printer to directly read a pathology number on a pathology embedding box. The pathology number is converted into a pathological section number and is printed by the glass slide printer, thereby achieving a one-to-one correspondence between the pathological number and the pathological section number, and avoiding the "unconscious error" problem caused by manually entering the pathological number.

Further, the guide plate of the conveying device according to the present invention has a variable angle to ensure that the glass slide pushed out by the feeding device can smoothly fall onto the conveying belt, eliminating the problem that the conveyed glass slide is blocked due to the uncertainty of the falling posture of the glass slide.

Although the present invention has been described with reference to the exemplary embodiments above, it should be understood that the used terms are illustrative and exemplary, and non-restrictive terms. Since the present invention can be specifically embodied in various forms without departing from the spirit or essence of the present invention, it should be understood that the above embodiments are not limited to any of the foregoing details, but should be broadly interpreted within the spirit and scope defined by the appended claims. Therefore, all changes and modifications falling within the scope of the claims or their equivalents shall be covered by the appended claims.

## Claims

1. A glass slide printer, which performs character and/or two-dimensional code printing on a marked area of a glass slide by inkjet, wherein the glass slide printer comprises:
a conveying device, which has a conveying path, and causes the glass slide to be printed to move along the conveying path;
an inkjet device, which is provided above the conveying path, and is configured to perform inkjet printing on the marked area of the glass slide on the conveying path; and/or
a curing device, which is provided above the conveying path, and is located downstream of the inkjet device; wherein the curing device is capable of curing the printing ink droplets ejected onto the glass slide to form characters or two-dimensional codes by heating and/or ejecting curing liquid.

2. The glass slide printer according to claim 1, wherein the curing device comprises: an electric heating element and/or a light radiating device to heat and/or cure the printing ink droplets.

3. The glass slide printer according to any one of the preceding claims, wherein the electric heating element is an infrared heating tube and/or a heating ceramic plate, and the light radiating device is a laser and/or an infrared emitter.

4. The glass slide printer according to any one of the preceding claims, wherein the curing device comprises: a container for holding curing liquid and/or an ejecting nozzle; and the curing liquid is capable of being ejected out through the ejecting nozzle to cure the printing ink droplets.

5. The glass slide printer according to any one of the preceding claims, wherein the glass slide printer further comprises: a microcontroller configured to control the operation of the conveying device, the inkjet device, and/or the curing device.

6. The glass slide printer according to any one of the preceding claims, wherein the glass slide printer further comprises: an image acquiring device configured to acquire a character to be printed and/or a character of a two-dimensional code;
the microcontroller comprises: a control module and a character recognizing module;
the image acquiring device is capable of capturing an image of a character and/or a two-dimensional code to be printed, and transmitting the image information to the character recognizing module; the character recognizing module is capable of analyzing and/or reading the characters in the image, and sending the read character data to the control module; and/or the control module controls the inkjet device to eject ink on the glass slide to form the character and/or the two-dimensional code.

7. The glass slide printer according to any one of the preceding claims, wherein the glass slide printer further comprises: a feeding device provided above the conveying device;
the feeding device is configured to load the glass slide to be printed, the feeding device has a discharge port, the discharge port faces the conveying path, and/or the glass slide in the feeding device is capable of being removed from the discharge port onto the conveying path sequentially.

8. The glass slide printer according to any one of the preceding claims, wherein the feeding device comprises:
a glass slide cassette, which is located on one side of the conveying path; wherein the glass slide cassette has a receiving space in which a plurality of glass slides are stacked, and/or the discharge port is provided on one side of the lower part of the glass slide cassette; wherein openings are provided at two opposite sides of the glass slide cassette at the same height;
a glass slide pushing mechanism, which is provided corresponding to the discharge port, and is configured to push a glass slide at the lower end of the glass slide cassette to the conveying path via the discharge port; and/or
a weight reducing mechanism, which is provided corresponding to the openings, and is capable of lifting the glass slide above the height position where the openings are located.

9. The glass slide printer according to any one of the preceding claims, wherein the weight reducing mechanism comprises: two gears meshed with each other, two deflection plates correspondingly connected with the two gears, respectively, and/or a weight reducing motor for driving the gears to rotate;
the two deflection plates are correspondingly provided at two of the openings, when the two gears mesh with each other and rotate, the two deflection plates are capable of being driven to swing upward or downward simultaneously; when the two deflection plates swing upward, the outer ends of the deflection plates are capable of simultaneously abutting against the same glass slide and lifting the glass slide upward; and/or when the two deflection plates swing downward, the lifted glass slide is lowered and separated from the glass slide.

10. The glass slide printer according to any one of the preceding claims, wherein the conveying device further comprises: a guide plate;
the guide plate is located directly above the conveying path and correspondingly below the discharge port, the guide plate is capable of swinging in a vertical plane, and its swing axis is horizontal and perpendicular to the conveying path; when the glass slide removed from the discharge port falls on the guide plate, the guide plate is caused to swing to an inclined state in the conveying direction of the conveying path, so that the glass slide is conveyed onto the conveying path.

11. The glass slide printer according to any one of the preceding claims, wherein the glass slide printer further comprises a base, and the conveying device, the inkjet device, the curing device, and the image acquiring device are all integrated and installed on the base.

12. The glass slide printer according to any one of the preceding claims, wherein the conveying device, the inkjet device, and/or the curing device are all integrated and installed on the base, and/or the image acquiring device is provided to be separated from the base.
